**Europäisches Patentamt**

**European Patent Office**

**Office européen des brevets**

(19)

(11) Veröffentlichungsnummer : **0 174 466**
**B1**

(12) **EUROPÄISCHE PATENTSCHRIFT**

(45) Veröffentlichungstag der Patentschrift :
28.09.88

(21) Anmeldenummer : 85108812.0

(22) Anmeldetag : 15.07.85

(51) Int. Cl.⁴ : **H 02 K 5/124,** H 02 K 5/15

(54) **Elektrische Maschine.**

(30) Priorität : 14.09.84 CH 4397/84

(43) Veröffentlichungstag der Anmeldung :
19.03.86 Patentblatt 86/12

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
DE-B- 1 002 864
US-A- 1 748 075
US-A- 2 329 151

(73) Patentinhaber : BBC Brown Boveri AG
Haselstrasse
CH-5401 Baden (CH)

(72) Erfinder : Brem, Ernst
Sägestrasse 21
CH-8952 Schlieren (CH)

**Beschreibung**

Die Erfindung bezieht sich auf eine elektrische Maschine nach dem Oberbegriff des Anspruchs 1.

Bei grossen elektrischen Maschinen mit wasserstoffgekühltem Rotor muss der Innenraum des Maschinengehäuses hermetisch gegenüber der Aussenwelt abgedichtet sein. Dies erfordert umfangreiche Vorkehrungen sowohl an den Dichtungsstellen zwischen Gehäusemantel und Gehäuseabschluss und im Bereich der Wellendurchführung. Darüber hinaus muss der Gehäuseabschluss so ausgebildet sein, dass er dem bis 10 bar erreichenden Innendruck standhält. Der Aufsatz « Turbogeneratoren », veröffentlicht in den « ETG-Fachberichten 3, Kraftwerks-Generatoren » VDE-Verlag GmbH, Berlin, 1977, S. 7-32, gibt einen auch heute noch aktuellen Ueberblick über die Ausbildung der Gehäuse/Gehäuseabschlüsse von Turbogeneratoren mit gasgekühlter Rotorwicklung. Der einteilige (Bild 23a auf Seite 29) oder horizontal geteilte (Bild 19 auf Seite 28) Gehäuseabschluss weist eine Vielzahl von radial verlaufenden Verstärkungsrippen auf. Die Abdichtung zwischen Gehäusemantel und Gehäuseabschluss gestaltet sich bei einteiligen Gehäuseabschlüssen zwar einfacher als bei horizontal geteilten. Weil jedoch die Wellendichtung erst nach dem definitiven Einbau des Rotors montiert werden kann, müssen die Bocklager genügend weit vom Gehäuseabschluss distanziert werden, um die Wellendichtung montieren zu können. Die damit verbundene Verlängerung der Maschine ist jedoch unerwünscht.

Ein weiteres Problem stellt die Zugänglichkeit der Statorendteile dar. Diese ist — wenn überhaupt — bei den bekannten Maschinen allenfalls durch Mannlöcher im Gehäusemantel, welche die Maschinenlänge vergrössern, nicht jedoch in den stark verrippten Gehäuseabschlüssen, gegeben.

Ausgehend von der bekannten elektrischen Maschine mit einteiligem Gehäuseabschluss liegt der Erfindung die Aufgabe zugrunde, den Gehäuseabschluss derart auszubilden, dass er einerseits den im Gehäuseinnern auftretenden Drücken standhält, andererseits jedoch genügend Raum für die Montage der Wellendichtung bleibt, ohne den Lagerabstand zu vergrössern.

Die Lösung dieser Aufgabe erfolgt durch die in den Patentansprüchen gekennzeichnete Erfindung.

Der Erfindungsgegenstand weist gegenüber dem Bekannten folgende Vorteile auf :

— der Rotor kann ohne Demontage der Gehäuseabschlüsse ein- und ausgefahren werden,

— die zweiteilige Wellendichtung kann ohne spezielle Montagevorrichtungen von oben und unten her in die kanalartige Einbuchtung abgesenkt bzw. hochgefahren und aufgrund des reichlich vorhandenen Platzes in die Rotorbohrung im Gehäuseabschluss eingebaut werden.

Mit der Ausgestaltung des Erfindungsgegenstandes nach Anspruch 2 wird ein sehr steifer Aufbau des Gehäuseabschlusses erreicht, der hinsichtlich Druckbeanspruchungen und Abdichtung dem einteiligen radial verrippten Gehäuseabschluss gleichkommt und darüber hinaus einen minimalen Lagerabstand zulässt. Die Ausbuchtungen erhöhen dabei nicht nur die Steifigkeit des Gehäuseabschlusses sondern bieten auch die Möglichkeit, Inspektionsöffnungen vorzusehen, die in Montagenischen führen. Von dort aus können ohne besonderen Aufwand die Maschinenwicklung und die Rotorkappe inspiziert werden.

Die Erfindung wird nachfolgend anhand der Zeichnung, in welcher Ausführungsbeispiele dargestellt sind, näher erläutert.

In der Zeichnung zeigt

Fig. 1 eine Draufsicht auf die Rückseite eines Gehäuseabschlusses einer elektrischen Maschine

Fig. 2 einen Horizontalschnitt durch den Gehäuseabschluss gemäss Fig. 1 längs deren Linie AA und das Ende des Gehäusemantels

Fig. 3 eine Draufsicht auf die Vorderseite des Gehäuseabschlusses nach Fig. 1 bzw. 2

Fig. 4 eine Abwandlung von Fig. 2 mit vertikalen Rippen in Form von Doppel-T- bzw. I-Trägern

Fig. 5 eine perspektivische Darstellung einer elektrischen Maschine mit Gehäuseabschlüssen nach Fig. 1.

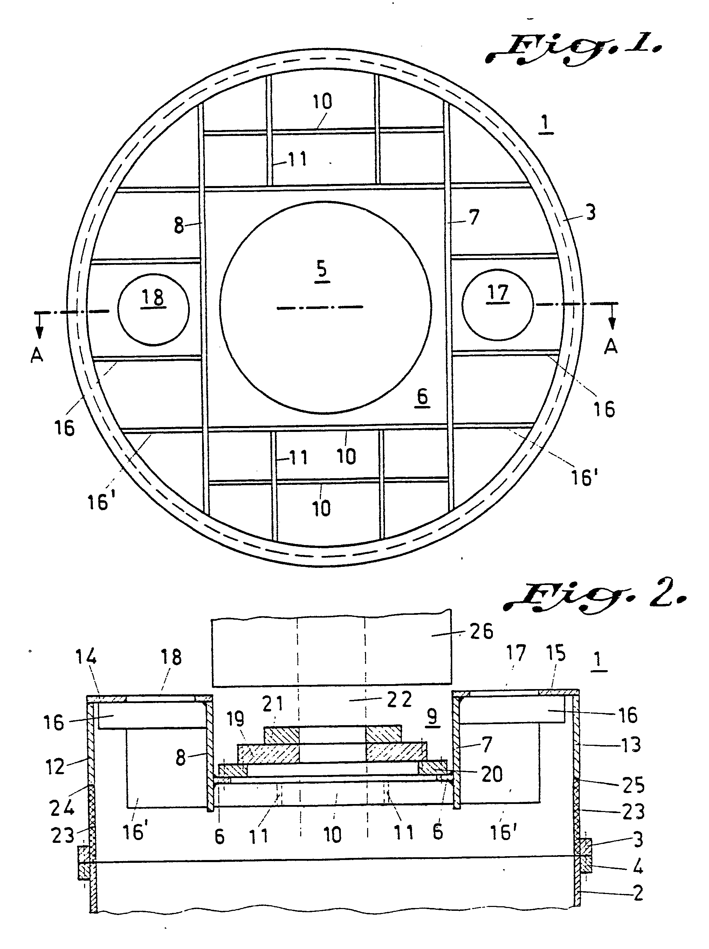

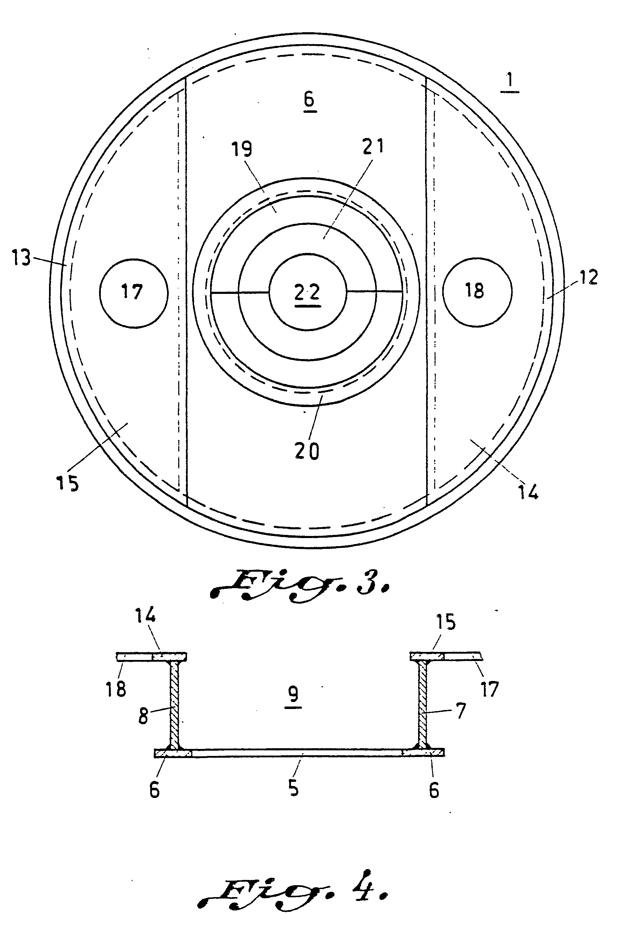

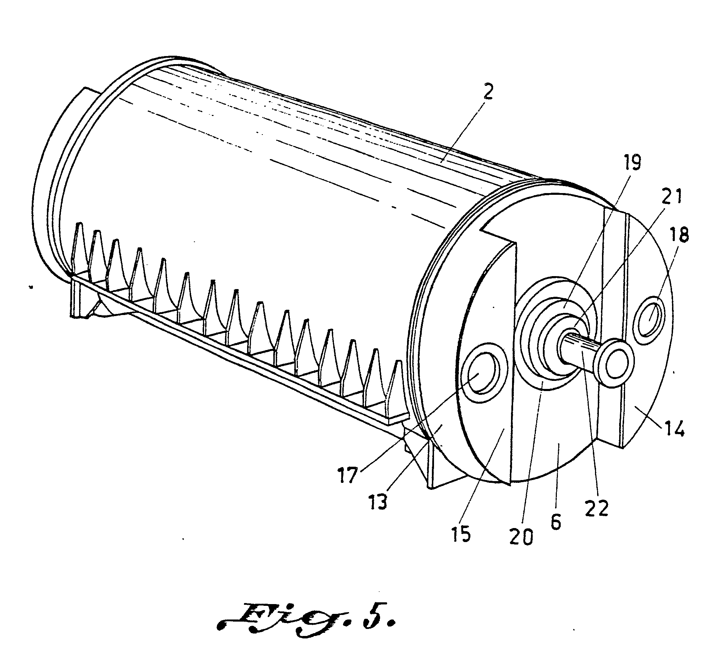

In den Fig. 1 bis 3 ist ein topfförmiger Gehäuseabschluss gesamthaft mit 1, ein Gehäusemantel mit 2 bezeichnet. Gehäusemantel und Gehäuseabschluss sind mittels Ringflanschen 3, 4 miteinander verschraubt. Der Gehäuseabschluss weist eine zentrale Bohrung 5 auf, deren Durchmesser nur wenig grösser ist als der maximale Aussendurchmesser des Rotors, jedoch gross genug, den Rotor der Maschine ohne Demontage des Gehäuseabschlusses 1 aus der Maschine zu entfernen.

Der Gehäuseabschluss besteht aus einer ersten ebenen Metallplatte 6, deren Breite nur wenig grösser ist als der Durchmesser der Bohrung 5. Sie erstreckt sich über die gesamte Höhe des Gehäuseabschlusses. Im rechten Winkel zur Metallplatte 6 sind auf beiden Seiten eine zweite 7 und eine dritte Metallplatte 8 angeschweisst, die sich gleichfalls über die gesamte Höhe erstrecken und als Versteifungsrippen dienen. Die so gebildete vertikal verlaufende Ausnehmung mit Rechteckquerschnitt ist mit 9 bezeichnet. Unterhalb und oberhalb der Bohrung 5 sind auf die Innenseite der ebenen Metallplatte 6 horizontal und vertikal verlaufende Verstärkungsrippen 10 bzw. 11 in der Art eines Fachwerks geschweisst.

Der Aussenkontur des Gehäusemantels 2 entsprechende kreisbogenförmig gebogene vierte 12 und fünfte Metallplatten 13, die an den beiden Schmalseiten je mit den zweiten und dritten Metallplatten 7 bzw. 8 verschweisst sind, bilden zusammen mit den Metallplatten 7 und 8 zylinderabschnitt- oder halbmondförmige Ausbuchtungen oder Nischen. Diese sind stirnseitig durch Deckel 14, 15 verschlossen. Auch diese Ausbuchtungen/Nischen sind durch horizontal verlaufende Rippen 16, 16′ im Innern versteift.

Etwa in Höhe der Bohrung 5 sind in den Deckeln 2 Inspektionsöffnungen 17, 18 vorgesehen, die den Zugang zu den Nischen ermöglichen. Die Inspektionsöffnungen (Mannlöcher) sind normalerweise durch Deckel (nicht dargestellt) verschlossen.

Die beiden untersten Versteifungsrippen 16′ sind gegenüber den anderen Rippen 16 axial länger und dienen als Standfläche für das Inspektionspersonal.

Aus Fig. 2 geht ferner die Lage der Wellendichtung, die vereinfacht als geteilter Ring 19 dargestellt ist, hervor, die unter Einschaltung eines geteilten Zwischenrings 20 am Gehäuseabschluss 1 befestigt ist, und welche die hermetische Abdichtung des (im Betrieb unter $H_2$-Druck stehenden) Maschinengehäuses am Durchtritt der Rotorwelle 22 gegenüber der Aussenwelt bewerkstelligt. Zur Wellendichtung gehört der ebenfalls zweiteilige Oelabstreifer 21.

Es versteht sich von selbst, dass alle Dichtstellen, z. B. zwischen Gehausemantel 2 und Gehäuseabschluss 1, mit geeigneten Dichtungen, z. B. in Nuten eingelegten O-Ringen, versehen sind.

An sich besteht die Möglichkeit, den Ringflansch 3 des Gehäuseabschlusses 1 unmittelbar an der ebenen Platte 6 und den gebogenen Platten 12 und 13 anzubringen, d. h. mit diesen zu verschweissen. Je nach axialer Länge des Gehäusemantels 2 und Ausladung der Wickelköpfe, sowie Platzbedarf des Druckerzeugers kann notwendig sein, die ebene Platte 6 und damit auch die Nischen von der Stirnseite des Gehäusemantels 2 zu distanzieren. Hierzu dient ein Distanzrohr 23 mit einer Aussenkontur des Gehäusemantels 2, das an seinem dem Gehäusemantel 2 zugewandten Ende den Flanschring 3 trägt, und das am anderen Ende mit der ebenen Platte 6 und den beiden gebogenen Platten 12 und 13 verschweisst ist. Die Schweissnähte zwischen den Platten 12 und 13 und diesem Rohr sind in Fig. 2 durch die Bezugsziffern 24 bzw. 25 gekennzeichnet. Die gebogenen Platten 12 und 13 können jedoch auch einstückig mit dem besagten Distanzrohr 23 ausgebildet werden, was die Herstellung des gesamten Gehäuseabschlusses erheblich vereinfacht.

Die in Fig. 4 veranschaulichte Variante der konstruktiven Ausbildung der Uebergangsstelle von den Deckeln 14, 15 zu der ebenen Platte 6 ermöglicht ohne herstellungstechnischen Mehraufwand eine noch steifere Ausbildung des Gehäuseabschlusses. Die Deckel 14, 15 sind gegenüber Fig. 2 innen und die ebene Platte 6 aussen um eine vorstehende Partie vergrössert. Die Wände 7 und 8 sind zwischen die genannten Teile eingeschweisst. Die Enden der ebenen Platte 6 und der Deckel 14, 15 bilden auf diese Weise zusammen mit den Wänden 7 und 8 ein Versteifungselement in der Art eines Doppel-T- oder I-Trägers, der den Gehäuseabschluss beidseits der Bohrung 5 durchsetzt und diesen entscheidend versteift, ohne die Ausnehmung 9 für die Unterbringung/Montage der Wellendichtung einzuengen.

Beiden Ausführungsvarianten ist gemeinsam, dass zwischen Lagerbock 26 und Gehäusestirnseite bei eingefahrenem Rotor genügend Raum für Montage- und Servicezwecke zur Verfügung steht und die Lagerböcke so dicht wie möglich oder notwendig an die Maschinenstirnseite herangerückt werden können.

Die seitlichen Nischen versteifen den Gehäuseabschluss und ermöglichen darüber hinaus den Zugang des Wickelkopfraumes von der Maschinenstirnseite her ohne Demontage der Gehäuseabschlüsse. Alle Drehstellen sind unkompliziert — keine T-Fugen wie bei Maschinen mit horizontal geteilten Gehäuseabschlüssen.

## Patentansprüche

1. Elektrische Maschine mit einem wasserstoffgekühlten Rotor und einem Stator, einem den Stator umgebenden Gehäusemantel (2), der stirnseitig mit je einem einteiligen, verrippten Gehäuseabschluss (1) gasdicht verschlossen ist, mit einer gasdichten Wellendurchführung (19) in beiden Gehäuseabschlüssen, mit einer zentralen Bohrung mit einem Durchmesser grösser als der Rotordurchmesser und mit Lagerböcken (26) zur Lagerung des Rotors (22), die distanziert von den Gehäuseabschlüssen (1) auf einem Maschinenfundament aufgestellt sind, dadurch gekennzeichnet, dass der Gehäuseabschluss (1) topfartig ausgebildet ist und eine durchgehende, in Vertikalrichtung verlaufende, kanalartige Einbuchtung (9) aufweist, deren lichte Weite grösser ist als der Rotoraussendurchmesser, und deren Seitenwände (7, 8) als Verstärkungselement ausgebildet sind.

2. Elektrische Maschine nach Anspruch 1, dadurch gekennzeichnet, dass der Gehäuseabschluss (1) zwei symmetrisch zur Maschinenachse verlaufende vertikale Rippen (7, 8) aufweist, deren horizontaler Abstand grösser ist als der Aussendurchmesser des Rotors (22), dass die Stirnfläche des Gehäuseabschlusses (1) im Bereich zwischen den vertikalen Rippen (7, 8) über die gesamte Maschinenhöhe eben ist, und dass er ausserhalb dieses Bereiches symmetrisch zur Maschinenachse zwei zylinderabschnittförmige Ausbuchtungen aufweist, welche einerseits durch die genannten vertikalen Rippen und andererseits durch konzentrisch zum Gehäusemantel verlaufende Wände (12, 13) begrenzt sind.

3. Elektrische Maschine nach Anspruch 2, dadurch gekennzeichnet, dass in der Stirnfläche (14, 15) der Ausbuchtung eine verschliessbare Inspektionsöffnung (17, 18) vorgesehen ist, und die Ausbuchtungen als Montagenischen ausgebildet sind.

4. Elektrische Maschine nach Anspruch 2 oder 3, dadurch gekennzeichnet, dass der Gehäuseabschluss im Innenraum der Ausbuchtungen horizontal und/oder vertikal verlaufende Verstärkungsrippen (16, 16') aufweist.

5. Elektrische Maschine nach Anspruch 2 oder 3, dadurch gekennzeichnet, dass im Bereich zwischen den vertikalen Rippen ober- und unterhalb der zentralen Bohrung fachwerkartige Versteifungselemente (10, 11) vorgesehen sind.

6. Elektrische Maschine nach einem der Ansprüche 2 bis 5, dadurch gekennzeichnet, dass die vertikalen Rippen als Doppel-T- bzw. I-Träger ausgebildet sind.

**Claims**

1. Electrical machine having a hydrogen-cooled rotor and a stator, an outer casing (2) which surrounds the stator and has a gas-tight connection at its ends with in each case a one-piece ribbed end casing (1), having a gas-tight shaft penetration (19) in both end casings, having a central hole with a diameter greater than the rator diameter and having bearing blocks (26) for supporting the rotor (22), which bearing blocks are mounted on a machine foundation at a distance from the end casings (1), characterised in that the end casing (1) is designed to be pot-shaped and has a continuous channel-type recess (9), which extends in the vertical direction and whose clear width is greater than the rotor outer diameter and whose side walls (7, 8) are designed as a stiffening element.

2. Electrical machine according to claim 1, characterised in that the end casing (1) has two vertically extending ribs (7, 8) symmetrical about the machine axis, the horizontal distance between which ribs being greater than the outer diameter of the rotor (22), that the end surface of the end casing (1) in the region between the vertical ribs (7, 8) is flat over the total machine height and that, outside this region, it has two cylindrical segment-shaped protrusions symmetrical about the machine axis, which protrusions are limited, on the one hand, by the vertical ribs mentioned and, on the other hand, by walls (12, 13) extending concentrically with the outer casing.

3. Electrical machine according to Claim 2, characterised in that a closable inspection opening (17, 18) is provided in the end surface (14, 15) of the protrusion and that the protrusions are designed as assembly niches.

4. Electrical machine according to Claim 2 or 3, characterised in that the end casing has horizontal and/or vertically extending strengthening ribs (16, 16') in the internal space of the protrusions.

5. Electrical machine according to Claim 2 or 3, characterised in that lattice type stiffening elements (10, 11) are provided in the region between the vertical ribs above and underneath the central hole.

6. Electrical machine according to one of the Claims 2 to 5, characterised in that the vertical ribs are designed as double T or I beams.

**Revendications**

1. Machine électrique avec un rotor refroidi à l'hydrogène et un stator, avec une enveloppe latérale (2) entourant le stator et fermée hermétiquement à chaque extrémité par un couvercle de fermeture (1) en une seule pièce et nervuré, avec un passage (19) étanche au gaz de l'arbre dans les deux couvercles de fermeture, avec un alésage central ayant un diamètre plus grand que le diamètre du rotor et avec des paliers à chaise (26) supportant le rotor (22) qui sont installés sur la fondation de la machine à distance des couvercles de fermeture (1), caractérisée en ce que le couvercle de fermeture (1) a la forme d'un godet et présente une cavité verticale (9) traversante, en forme de canal, dont la largeur libre est plus grande que le diamètre extérieur du rotor, et dont les parois latérales (7, 8) sont constituées en élément de renforcement.

2. Machine électrique suivant la revendication 1, caractérisée en ce que le couvercle de fermeture (1) présente deux nervures verticales (7, 8) disposées symétriquement par rapport à l'axe de la machine, dont l'écartement horizontal est plus grand que le diamètre extérieur du rotor (22), en ce que la face d'extrémité du couvercle de fermeture (1) est plane, sur toute la hauteur de la machine, dans la région comprise entre les nervures verticales (7, 8), et en ce qu'en dehors de cette région, il présente deux chambres en forme de segments de cylindre, disposées symétriquement par rapport à l'axe de la machine, qui sont limitées d'une part par les nervures verticales précitées et d'autre part par des parois (12, 13) concentriques à l'enveloppe latérale.

3. Machine électrique suivant la revendication 2, caractérisée en ce qu'il est prévu une ouverture d'inspection (17, 18) obturable dans la face d'extrémité (14, 15) de la chambre, et en ce que les chambres constituent des niches de montage.

4. Machine électrique suivant la revendication 2 ou 3, caractérisée en ce que le couvercle de fermeture présente des nervures de renforcement (16, 16') horizontales et/ou verticales à l'intérieur des chambres.

5. Machine électrique suivant la revendication 2 ou 3, caractérisée en ce qu'il est prévu des éléments de renforcement (10, 11) formant treillis dans la région comprise entre les nervures verticales, au-dessus et en dessous de l'alésage central.

6. Machine électrique suivant l'une ou l'autre des revendications 2 à 5, caractérisée en ce que les nervures verticales ont la forme d'un profilé en double T ou en I.

*Fig. 1.*

*Fig. 2.*

**Fig. 3.**

**Fig. 4.**

*Fig. 5.*